# EUROPEAN PATENT SPECIFICATION

(11) **EP 3 262 308 B1**
(45) Date of publication and mention of the grant of the patent: **13.11.2019**
(21) Application number: 16755982.2
(22) Date of filing: 26.02.2016
(51) Int. Cl.: F16B 12/44, A47B 96/06, F16B 12/12, A47B 13/02

(54) **FURNITURE JOINT**
VERBINDUNGSEINRICHTUNG FÜR MÖBEL
DISPOSITIF D'ASSEMBLAGE POUR MEUBLES

(30) Priority: 27.02.2015 SE 1550230
(43) Date of publication of application: 03.01.2018
(73) Proprietor: IKEA Supply AG, 4133 Pratteln (CH)
(72) Inventor: KÄLL, Håkan, 343 93 Älmhult (SE)
(74) Representative: Ström & Gulliksson AB
(86) International application number: PCT/SE2016/050146
(87) International publication number: WO 2016/137385

(56) References cited:
- WO-A1-2010/034467
- WO-A1-2013/104422
- US-A- 4 258 464
- US-A1- 2014 205 373

## Description

### Technical field

The present invention concerns a furniture joint between two furniture parts.

### Technical background

To join furniture parts to each other many different ways have been used throughout the years. Often different types of mechanical fastening means are used. It is also known to give the furniture parts different shapes, such as grooves, for forming joints between the furniture parts. For self assembly furniture it is important that the different furniture parts can be assembled to each other in a safe and relatively simple way. This is especially important when the customer is to assemble the furniture on his/her own. It is therefore always an aspiration to improve the joints between the different furniture parts. The improvements may concern the quality of the joint, i.e. how well the furniture parts are assembled to each other. They may also concern the manufacturing costs, ease of assembly etc.

US2014/0205373A1 discloses one example of a furniture joint wherein a first furniture part comprises two female parts and a second furniture part comprises two male parts. The two furniture parts are joined by a rotating movement. The female parts are constituted by two bent or curved recesses arranged next to each other with their curvatures facing away from each other in a convex manner. A joint of this type is suitable for post shaped items such as table legs or the like where the post shaped item has a quadrangular cross section. In such design the curved recesses will be hidden by the post shaped item. It has however been noted that this will not be the case if the furniture instead is provided with a post shaped item having a cross sectional size and geometry that in the mounted position does not cover the female parts of the furniture joint, i.e. the foot print of the post shaped item will be too small. Thereby the recesses will be visible after mounting. That will constitute a non-acceptable defect.

### Summary

One object of the present invention is to be able to arrange joints for assembly of furniture parts to each other. The joints should be practical to use and yet give a secure assembly of the furniture parts. A further object is that the furniture parts may be assembled without the need of any fastening means and without the use of any tools. It should also be possible to separate the furniture parts from each other after assembly, without harming the furniture parts.

These and other objects are solved by a furniture joint comprising a first furniture part having a first and a second male part and a second furniture part having a first and a second female part, wherein the first and the second male parts each are formed by a dowel extending in a longitudinal direction and having a free end facing away from a surface of the first furniture part, the first female part is formed by a recess having a curved extension between a first end portion and a second end portion, said first end portion forming an insertion portion, said second end portion forming a locking portion, and the second female part is formed by a recess having a straight-linear extension between a first end portion and a second end portion, said first end portion forming an insertion portion, said second end portion forming a locking portion, whereby the furniture joint is adapted to be set to a mounting position by moving the first furniture part along the longitudinal directions of said dowels such that the insertion portion of the first female part receives the free end of the dowel forming the first male part, and such that the insertion portion of the second female part receives the free end of the dowel forming the second male part, and from the mounting position to a locking position by rotating the first furniture part relative to the second furniture part such that the dowel forming the first male part is moved along the curved recess forming the first female part from the first end portion to the second end portion, while the dowel forming the second male part is rotated and moved along the straight-linear extension of the recess forming the second female part from the first end portion to the second end portion, whereby the first and second furniture parts in said locking position are prevented from being separated in the longitudinal direction of said dowels.

By the invention a furniture joint is achieved that provides a smaller foot print of the second furniture part as compared to known furniture joints using a rotating locking movement while still covering the recesses. Also the furniture joint allows a post or block shaped item to be connected in flush with a curved corner portion. Further, the operation principle of the furniture joint is very simple and fully manual. Additionally, the furniture joint is fully separable. By the curved extension of the recess of the first female part, the first furniture part may be rotated in view of the second furniture part from the mounting position to the locking position while the first and second male parts are firmly guided and interlocked by their engagement with the first and second female parts. When the furniture joint is set from the mounting position to the locking position, the first dowel will be in guiding contact with at least one of the longitudinal side walls of the curved recess while the second dowel will be forced to move along the straight-linear extension of the second recess.

The furniture joint may further comprise an intermediate indicator portion in which the first or the second longitudinal side wall of the first female part comprises a restriction, whereby when the dowel forming the first male part passes the restriction, the dowel forming the second male part is temporarily forced towards the second end portion of the second female part to a greater extent than when the dowel forming the first male part is moved to the second end portion of the first female part from the mounting position to the locking position.

Accordingly, this will cause a temporarily tensioning force between the dowels and the female parts when the two furniture parts are rotated along the intermediate indicator portion. This may be experienced by the operator as a momentary increased resistance. As the two furniture parts are further rotated past the intermediate indicator portion, the resistance will be relieved, indicating that the two furniture parts have been correctly mounted. This relieve may in some circumstances even be experienced as an audible effect in the form a "click"-like sound. It is to be understood that more than one restriction may be used. The restriction may be formed as a bulge. It may also be formed by the distance between the opposite longitudinal sidewalls being gradually reduced as seen from the first end portion to the intermediate indicator portion, while again increasing after the intermediate indicator portion in a direction towards the second end portion.

The dowels forming the first and second male parts may each comprise locking means in the form of at least one rim extending radially from the envelope surface of the dowel, and wherein the recesses forming the first and second female parts each comprises at least one corresponding groove, whereby in said locking position, the at least one rim of the first male part is adapted to engage the at least one corresponding groove of the first female part and the at least one rim of the second male part is adapted to engage the at least one corresponding groove of the second female part. The number of rims may vary depending on expected loads on the furniture. Also, the number of rims and their design may be used as an indicator to the operator of how to orient the parts during assembly.

One or both opposite longitudinal side walls extending between the first and second end portions of the recess of the first female part may comprise at least one groove.

The opposite longitudinal side walls of the recess forming the first female part may have a single-curved extension convexly facing towards the recess forming the second female part or a single-curved extension concavely facing away from the recess forming the second female part. By a recess having a single-curved extension convexly facing towards the recess forming the second female part, the two dowels forming the first and second male parts may be temporarily pushed towards each other as the first dowel passes along the intermediate indicator portion. By the concave curvature on the other hand the two dowels may be pressed apart from each other as the first dowel passes along the intermediate indicator portion.

The groove of the recess forming the first female part may have a longitudinal extension along at least a part of one or both of the opposite longitudinal side walls and along the envelope surface of the second end portion. A longer extension of the groove will provide a better and more stable guiding of the dowel during the rotation from the mounting position to the locking position.

The distance between the opposite longitudinal side walls of the recess forming the first female part may be gradually reduced as seen in a direction from the first end portion towards the second end portion. A gradual decrease in the distance between the side walls may enhance the guiding of the dowel during the rotation from the mounting position to the locking position and also provide a gradual pushing/pulling of the dowels.

The distance between the opposite longitudinal side wall portions of the recess forming the first female part as seen along said opening may be uniform between the first and the second end portions, while being locally reduced along the intermediate indicator portion. Thereby the intermediate indicator portion forms a restriction.

The at least one groove of the recess forming the first female part may have a cross section as seen transverse its longitudinal extension being complementary with the at least one rim of the dowel forming the first male part.

At least a part of the envelope surface of the second end portion of the recess forming the second female part may comprise at least one groove adapted to engage at least one rim of the dowel forming the second male part when the furniture joint is in the locking position. This contributes to a more stable and rigid furniture joint. The engagement between a groove and a rim in this area contributes to counteraction of a bending action of the first furniture part when subjected to a sideward force. The portion of the envelope surface provided with a groove should preferably at least have an extension falling within a virtual circular sector formed while turning the first furniture part in view of the second furniture part from the mounting position to the locking position.

The dowels forming the first and second male parts and/or their respective at least one rims may be formed from a material different from the material of the first furniture part. By way of example the dowel and/or its rims may be an injection molded component. Also, the dowel and its rims may be provided as two inter-connectable parts.

The dowel forming the first male part may have a larger cross section as seen transverse its longitudinal direction than the dowel forming the second male part. This provides a readily visible indicator to the operator of how to orient the parts during assembly. Further, depending on type of furniture part, the two dowels of the male furniture part may be subjected to different loads during use when subjected to a sideward force, such as a sliding movement along a high friction material such as a rug. This may also be accommodated for by making the dowel forming the first male part longer than the dowel forming the second male part or by providing the dowel forming the first male part with a larger number of rims.

The first furniture part may be a post shaped item, a knob shaped item, or a block shaped item or any other item intended to be rotated into a locking position.

According to another aspect, the invention relates to a furniture or a furniture sub-assembly comprising a furniture joint with the features given above.

Further objects and advantages of the present invention will be obvious to a person skilled in the art reading the detailed description given below describing different embodiments.

### Brief description of the drawings

The invention will be described in detail with reference to the schematic drawings.
Fig. 1 discloses one embodiment of a table.
Fig. 2 discloses one embodiment of two furniture parts to be joined by a furniture joint according to the present invention.
Figs. 3a and 3b disclose the furniture parts set to the mounting position.
Figs. 4a-4c disclose the furniture parts when set from the mounting position to the locking position.
Figs. 5a-5c disclose a second embodiment of the furniture joint.

### Detailed description

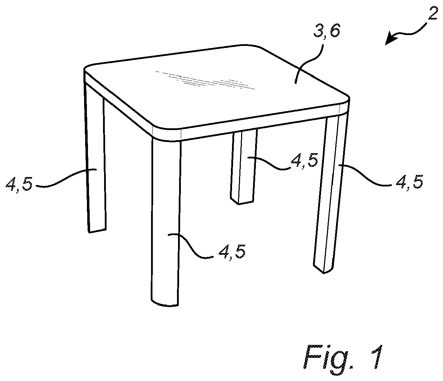

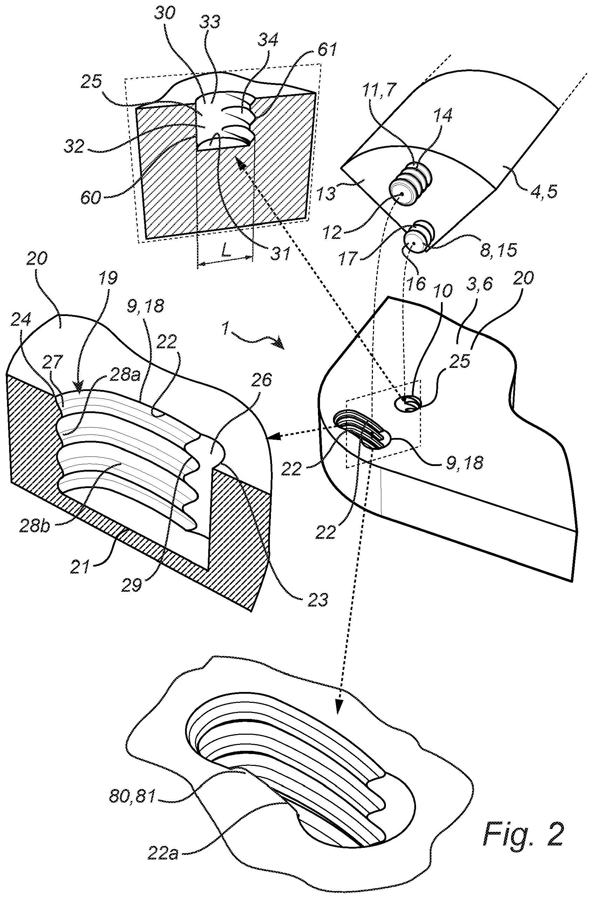

Now turning to Figs. 1 and 2 one embodiment of the inventive furniture joint 1 is disclosed as applied to a table 2 comprising a table top 3 and four legs 4. It goes without saying that the furniture joint 1 should not be restricted to tables but is equally applicable to other types of furniture.

Each leg 4 constitutes what is referred to in the present application as a first furniture part 5, while the table top 3 constitutes what is referred to in the application as a second furniture part 6. Each first furniture part 5 comprises a first male part 7 and a second male part 8. Further, the second furniture part 6 comprises pairs of a first and a second female part 9, 10, where the number of pairs corresponds to the number of first furniture parts 5.

The first male part 7 is formed by a dowel 11 extending in a longitudinal direction and having a free end 12 facing away from a surface 13 of the first furniture part 5. The first male part 7 has a circular cross section.

The envelope surface of the dowel 11 is provided with a plurality of circumferential rims 14 extending in the radial direction thereof. In the disclosed embodiment four rims 14 are arranged next to each other along the longitudinal direction of the dowel 11. The rims 14 constitute locking means to be discussed below.

The second male part 8 is formed by a dowel 15 extending in a longitudinal direction and having a free end 16 facing away from the surface 13 of the first furniture part 5. The second male part 8 has a circular cross section.

The envelope surface of the dowel 15 is provided with a plurality of circumferential rims 17 extending in the radial direction thereof. In the disclosed embodiment three rims 17 are arranged next to each other along the longitudinal direction of the dowel 15. The rims 17 constitute locking means to be discussed below.

The dowels 11, 15 forming the first and second male parts 7, 8 may be integrally formed with the first furniture part 5 or separate objects attached thereto. The attachment may be made by pressing, screwing, bonding, welding or the like. The dowels 11, 15 may be made by the same type of material or by a different type of material than the first furniture part 5. The dowels 11, 15 may for instance be made of a plastic, i.e. a polymer based material, a wood or wood based material or metal or any other suitable material.

Although not necessary, in the disclosed embodiment the dowel 11 forming the first male part 7 is longer and has a larger diameter than the dowel 15 forming the second male part 8. Also, the first dowel 11 may, as is disclosed, be provided with more rims 14 than the second dowel 15. The skilled person will be aware of that the overall joint strength is determined by the diameter and also the number of rims, and that the position of the joint and the material of the first and second furniture parts will limit the diameter and the length of the dowels. Also, the inherent strength of the material of the first furniture part will, at least to some extent, determine the number of rims. Further, these differences will obviate to the person who will assemble the furniture how to orient the first furniture part in view of the second furniture part.

The first female part 9 is formed as a recess 18 in the second furniture part 6. The recess 18 has an opening 19 arranged in the major surface plane 20 of the second furniture part 6, a bottom wall 21 and opposite longitudinal side wall portions 22a, 22b extending from the edges of the opening 19 to the bottom wall 21. The recess 18 has a depth with an extension extending essentially orthogonally to the major surface plane 20 of the second furniture part 6. The depth corresponds to or slightly exceeds the length of the dowel 11 forming the first male part 7 to be received therein.

The recess 18 has an elongated single-curved extension between a first end portion 23 and a second end portion 24. In the embodiment of Fig. 2, the recess 18 has a convex extension with respect to the second recess 25 to be discussed below.

The first end portion 23 forms an insertion portion 26 adapted to receive the free end 12 of the dowel 11 as the first furniture part 5 and its dowels 11, 15 is moved along the longitudinal direction of said dowels 11, 15. The first end portion 23 has a circular cross section although other cross sections are possible. The dimension of the cross section exceeds the dimension of the cross section of the dowel 11 as seen at the widest portion thereof, i.e. across the rims 14.

The second end portion 24 forms a locking portion adapted to engage the rims 14 of the dowel 11. The locking engagement is in this embodiment made possible by the envelope surface 27 of the second end portion 24 being provided with grooves 28a adapted to accommodate the rims 14 of the dowel 11. The number of grooves 28a corresponds to the number of rims 14.

The grooves 28a of the second end portion 24 have a cross section with a dimension adapted to allow the rims 14 of the dowel 11 to be inserted therein by a movement along the longitudinal extension of the recess 18. While positioned in the second end portion 24, the dowel 11 with its rims 14 is prevented from being removed from the second end portion 24 by a movement in a direction coinciding with the longitudinal extension of the dowel 11.

In the embodiment of Fig. 2, the opposite longitudinal side wall portions 22a, 22b of the recess 18 are along their envelope surfaces 29 provided with grooves 28b extending from the first end portion 23 to the second end portion 24. The grooves 28b may extend the full length as seen from the first and second end portion 23, 24 or start at a position closer to the second end portion 24 than the first end portion 23. The grooves 28b merge with the grooves 28a of the second end portion 24.

The grooves 28a, 28b have a cross sectional geometry transverse their longitudinal extensions corresponding to the cross sectional geometry of each rim 14 of the dowel 11.

In the embodiment of Fig. 2, the first longitudinal side wall 22a is provided with an intermediate indicator portion 80. The intermediate indicator portion 80 is formed as a restriction 81 facing towards the second female part 10 to be discussed below. The distance between the opposite longitudinal side wall portions 22a, 22b of the recess 18 as seen along said opening 19 may be uniform between the first and the second end portions 23, 24, while being locally reduced along the intermediate indicator portion 80. The restriction 81 may in fact be seen as a friction element since the first dowel 11 should be allowed to be moved along and past the restriction 81 while the second dowel 15 is temporarily pushed into an even closer contact with the second end portion 61 of the second female part 10.

The second furniture part 6 further comprises a second female part 10. The second female part 10 is formed by a recess 25 adapted to receive the free end 16 of the dowel 15 forming the second male part 8. The recess 25 has a straight-linear extension L between a first end portion 60 and a second end portion 61. The extension L exceeds the cross section of the second male part 8 as measured across its rims 17. By way of example, provided the male part 8 has a circular cross section, the extension L may correspond to the diameter as measured across the rims 17 + the width of a rim 17.

The recess 25 has a depth corresponding to or slightly exceeding the length of the dowel 15. Further it has an envelope surface 33 extending between the first and second end portions 60, 61.

The first end portion 60 of the recess 25 forms an insertion portion 32 having an opening 30 closest to the major surface plane 20 of the second furniture part 6 and a bottom wall 31. The insertion portion 32 has a cross sectional dimension allowing insertion of the dowel 15 with its rims 17 into the recess 25 along a direction corresponding to the longitudinal center axis of the dowel 15.

The dowel 15 is movable inside the recess 25 so that it may be freely inserted and retracted from the insertion portion 32 in a direction along the longitudinal centre axis of the dowel 15. Further it is movable and rotatable in a direction transverse the longitudinal axis towards the second end portion 61 to a locked position in which any longitudinal movement is prevented.

To allow said locking, a portion of the envelope surface 33 at the second end portion 61 is provided with grooves 34 adapted to engage with the rims 17 of the dowel 15 when the furniture joint 1 is set to the locking position.

The portion of the envelope surface 33 forming the second end portion 61 provided with grooves 34 should at least have an extension falling within a virtual circle sector formed while turning the first furniture part 5 in view of the second furniture part 6 from the mounting position to the locking position. During such turning the dowel 15 with its rims 17 will turn and move inside the recess 25 to the locked position in which any longitudinal movement is prevented. This will be discussed in detail below while discussing the operation of the furniture joint 1.

Each groove 34 has a cross sectional geometry which allows the rims 17 of the dowel 15 to engage the grooves 34 as the dowel 15 is moved within the recess 25 from the first end portion 60 to the second end portion 61.

In the following the operation of the furniture joint 1 will be discussed. For ease of understanding the outlines of the first furniture part 5 are shown with dashed lines. As noted, in this embodiment, the recess 18 of the first female part has a convex extension.

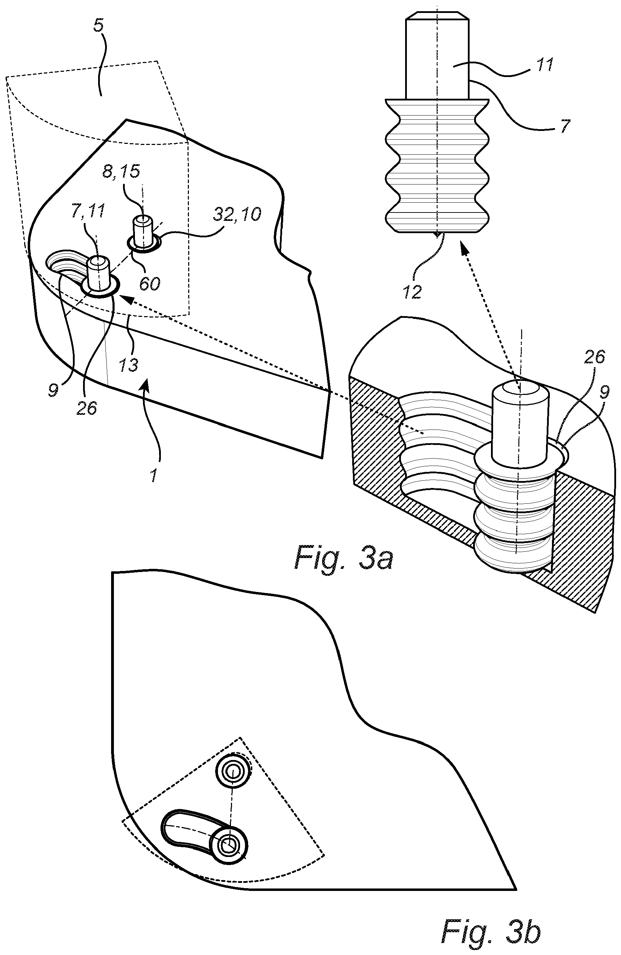

Starting with Figs. 3a and 3b, the furniture joint 1 is set to a mounting position by moving the first furniture part 5 along the longitudinal directions of the dowels 11, 15 such that the insertion portion 26 of the first female part 9 receives the free end 12 of the dowel 11 of the first male part 7, and such that the insertion portion 32 adjacent the first end portion 60 of the second female part 10 receives the free end (not shown) of the dowel 15 of the second male part 8. In this position, the two dowels 11, 15 are preferably under no tension.

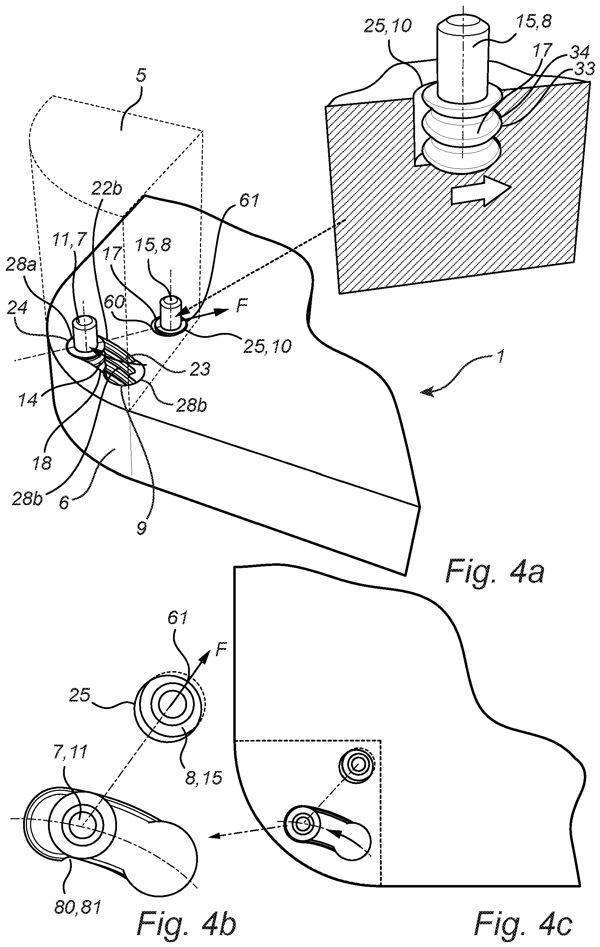

Now turning to Figs. 4a-4c, the furniture joint 1 is set from the mounting position to the locking position by rotating the first furniture part 5 in view of the second furniture part 6 such that the dowel 11 forming the first male part 7 is moved along the recess 18 forming the first female part 9 from the first end portion 23 to the second end portion 24. During this movement the dowel 11 will be in guiding contact with one or both of the longitudinal side walls 22a, 22b of the recess 25 forming the second female part 10. During this guiding, the dowel 15 forming the second male part 8 is rotated and also forced to be moved along the straight-linear extension of the recess 25 from the first end portion 60 to the second end portion 61 thereof. Thus, the dowel 15 will due to the curvature of the recess 18 be rotated and moved inside the recess 25 and pressed into contact with the second end portion 61, see arrow F.

As the dowel 11 forming the first male part 7 passes along the intermediate indicator portion 80, see Fig. 4b, the operator will experience a momentary increased resistance since the dowel 11 by the restriction 81 temporarily will be forced in a direction F towards the dowel 15 forming the second male part 8. As a consequence thereof the dowel 15 will temporarily be forced to an even closer contact with the second end portion 61 of the second female part 10.

As the two furniture parts are further rotated past the intermediate indicator portion 80, see Fig. 4c, the experienced resistance will be relieved, indicating that the two furniture parts have been correctly mounted. This relieve may in some circumstances even be experienced as an audible effect in the form a "click"-like sound.

It is preferred that the intermediate indicator portion 80 is located in a position just before the dowel 11 has reached the second end portion 24 of recess 18, i.e. just before reaching the locking position.

During the setting from the mounting position to the locking position, the rims 14 of the dowel 11 will engage the grooves 28b extending between the first and second end portions 23, 24 before subsequently engaging the grooves 28a of the second end portion 24. For the convex curvature it is sufficient if the recess 18 forming the first female part 9 is provided with grooves 28a, 28b along the longitudinal side wall 22b closest to the recess 25 forming the second female part 10 and on its second end portion 24. This may by way of example be favourable if the furniture part or a part thereof which is provided with the recesses is provided by injection moulding.

The convex curvature of the recess 18 forming the first female part 9 has shown to be advantageous in that the inherent resistance of the material of the surrounding goods may be used to better distribute and thereby accommodate the temporary forces that occur along the intermediate indicator portion when the furniture joint is set from the mounting position to the locking position.

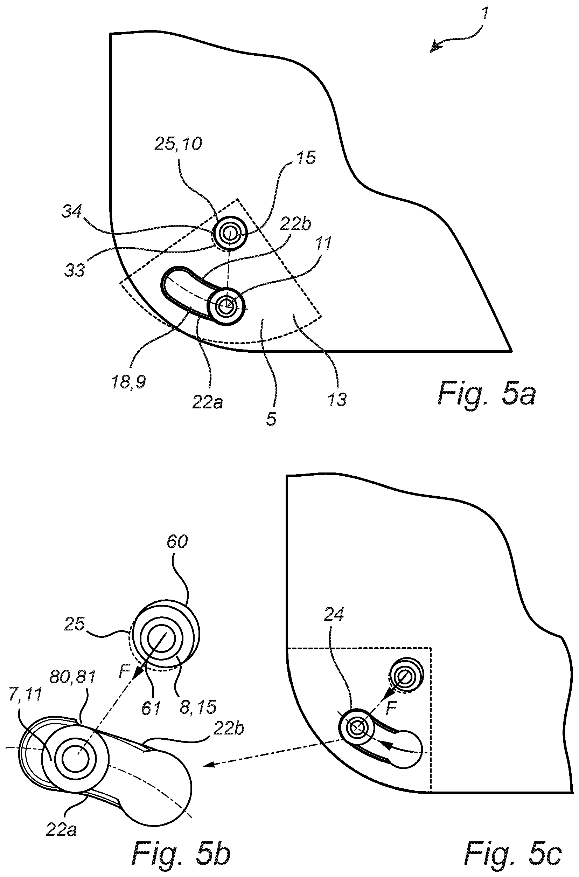

Now turning to Figs. 5a-5c a second embodiment of the invention is disclosed. The furniture joint 1 differs from the first embodiment in that the recess 18 forming the first female part 9 has a concave single-curved non-circular arc-shaped extension with respect to the recess 25 forming the second female part 10. Also, the recess 25 is provided with grooves 34 on the second end portion 61 which in this embodiment is arranged next to the recess 18 forming the first female part 9. Further, the intermediate indicator portion is arranged on the second longitudinal side wall 22b.

Now turning to Figs. 5a-5c, the furniture joint 1 is set from the mounting position to the locking position by rotating the first furniture part 5 in view of the second furniture part 6 such that the dowel 11 forming the first male part 7 is moved along the recess 18 forming the first female part 9 from the first end portion 23 to the second end portion 24. During this movement the dowel 11, will be in guiding contact with one or both of the longitudinal side walls 22a, 22b of the recess 25 forming the second female part 10. During this guiding, the dowel 15 forming the second male part 8 is rotated and also forced to be moved along the straight-linear extension of the recess 25 from the first end portion 60 to the second end portion 61 thereof. Thus, the dowel 15 will due to the curvature of the recess 18 be rotated and moved inside the recess 25 and pressed into contact with the second end portion 61, see arrow F.

As the dowel 11 forming the first male part 7 passes along the intermediate indicator portion 80, see Fig. 5b, the operator will experience a momentary increased resistance since the dowel 11 by the restriction 81 temporarily will be forced in the direction F away from the dowel 15 forming the second male part. As a consequence thereof the dowel 15 will temporarily be forced to an even closer contact with the second end portion 61 of the second female part 10.

As the two furniture parts are further rotated past the intermediate indicator portion 80, see Fig. 5c, the experienced resistance will be relieved, indicating that the two furniture parts have been correctly mounted. This relieve may in some circumstances even be experienced as an audible effect in the form a "click"-like sound.

It is preferred that the intermediate indicator portion is located in a position just before the dowel 11 has reached the second end portion 24 of recess 18, i.e. just before the locking position.

For the concave curvature disclosed in the embodiment of Figs. 5a-5c, it is sufficient if the recess 18 forming the first female part 9 is provided with grooves 28a, 28b along the longitudinal side wall 22a furthest away from the recess 25 forming the second female part 10 and on its second end portion 24. This may by way of example be favourable if the furniture part or a part thereof which is provided with the recesses is provided by injection moulding.

It is appreciated that the embodiments of the invention as disclosed above may be altered in different ways within the scope of the appended claims.

The effect of a temporary resistance just before the dowel forming the first male part has reached its end position adjacent the end portion of the recess forming the first female part may be provided also if the curved recess has a circular arc-shaped extension without any intermediate indicator portion with a restriction. The temporary resistance may by way of example be provided by one or several bulges in the grooves or on the rims of the dowel.

The furniture parts may be parts of different types of furniture, such as tables, chairs, cupboars etc. The furniture joint is applicable to any parts adapted to be mounted to each other by a rotating movement. The furniture parts may be made of any material, such as wood, fibre or chip boards, plastic and metal. Co-operating furniture parts may be made of different materials.

The geometry of the recesses may be formed by machining in one or several steps by e.g. drilling and milling. The geometry of the recesses may also be formed by a moulded insert representing said geometry, which insert is arranged to be attached to a recess formed in the furniture part.

## Claims

1. A furniture joint (1) comprising a first furniture part (5) having a first and a second male part (7, 8), and a second furniture part (6) having a first and a second female part (9, 10), wherein
the first and the second male parts (7, 8) each are formed by a dowel (11, 15) extending in a longitudinal direction and having a free end (12, 16) facing away from a surface (13) of the first furniture part (5),
the first female part (9) is formed by a recess (18) having a curved extension between a first end portion (23) and a second end portion (24), said first end portion (23) forming an insertion portion (26) and said second end portion forming a locking portion, and
the second female part (10) is formed by a recess (25) having a straight-linear extension between a first end portion (60) and a second end portion (61), said first end portion (60) forming an insertion portion (32), said second end portion forming a locking portion, whereby
the furniture joint (1) is adapted to be set to a mounting position by moving the first furniture part (5) along the longitudinal directions of said dowels (11, 15) such that the insertion portion (26) of the first female part (9) receives the free end (16) of the dowel (11) forming the first male part (7), and such that the insertion portion (32) of the second female part (10) receives the free end (16) of the dowel (15) forming the second male part (8), and
from the mounting position to a locking position by rotating the first furniture part (5) relative to the second furniture part (6) such that the dowel (11) forming the first male part (7) is moved along the curved recess (18) forming the first female part (9) from the first end portion (23) to the second end portion (24), while the dowel (15) forming the second male part (8) is rotated and moved along the straight-linear extension of the recess (25) forming the second female part (10) from the first end portion (60) to the second end portion (61), whereby the first and second furniture parts (5, 6) in said locking position are prevented from being separated in the longitudinal direction of said dowels (11, 15).

2. A furniture joint according to claim 1, further comprising an intermediate indicator portion (80) in which the first or second longitudinal side wall (22a; 22b) of the first female part (9) comprises a restriction (81), whereby when the dowel (11) forming the first male part (7) passes the restriction (81), the dowel (15) forming the second male part (8) is temporarily forced towards the second end portion (61) of the second female part (10) to a greater extent than when the dowel (11) forming the first male part (7) is moved to the second end portion (24) of the first female part (9) from the mounting position to the locking position.

3. A furniture joint according to claim 1, wherein the dowels (11, 15) forming the first and second male parts (7, 8) each comprises locking means in the form of at least one rim (14, 17) extending radially from the envelope surface of the dowel, and wherein the recesses (18, 25) forming the first and second female parts (9, 10) each comprises at least one corresponding groove (28a, 28b, 34), whereby in said locking position, the at least one rim (14) of the first male part (7) is adapted to engage the at least one corresponding groove (28a, 28b) of the first female part (9) and the at least one rim (17) of the second male part (8) is adapted to engage the at least one corresponding groove (34) of the second female part (10).

4. A furniture joint according to any of the previous claims, wherein one or both opposite longitudinal side walls (22) extending between the first and second end portions (23, 24) of the recess (18) of the first female part (7) comprises at least one groove (28, 28b).

5. A furniture joint according to claim 4, wherein the opposite longitudinal side walls (22) of the recess (18) forming the first female part (9) have a single-curved extension convexly facing towards the recess (25) forming the second female part (10), or a single-curved extension concavely facing away from the recess (25) forming the second female part (10).

6. A furniture joint according to claim 4 or 5, wherein the groove (28a, 28b) of the recess (18) forming the first female part (9) has a longitudinal extension along at least a part of one or both of the opposite longitudinal side walls (22) and along the envelope surface (27) of the second end portion (24).

7. A furniture joint according to any one of claims 4-6, wherein the distance between the opposite longitudinal side walls (22) of the recess (18) forming the first female part (9) is gradually reduced as seen in a direction from the first end portion (23) towards the second end portion (24).

8. A furniture joint according to any one of claims 4-6, wherein the distance between the opposite longitudinal side wall portions (22a, 22b) of the recess (18) forming the first female part (9) as seen along said opening (19) is uniform between the first and the second end portions (23, 24), while being locally reduced along the intermediate indicator portion 80.

9. A furniture joint according to any of claims 4-8, wherein the at least one groove (28a, 28b) of the recess (18) forming the first female part (9) has a cross section as seen transverse its longitudinal extension being complementary with the at least one rim (14) of the dowel (11) forming the first male part (7).

10. A furniture joint according to any of the previous claims, in which at least a part of the envelope surface (33) of the second end portion (61) of the recess (25) forming the second female part (10) comprises at least one groove (34) adapted to engage at least one rim (17) of the dowel (15) forming the second male part (8) when the furniture joint (1) is in the locking position.

11. A furniture joint according to any of the preceding claims, in which the dowels (11, 15) forming the first and second male parts (7, 8) and/or their respective at least one rims (14, 17) are formed from a material different from the material of the first furniture part (5).

12. A furniture joint according to any of the previous claims, in which the dowel (11) forming the first male part (7) has a larger cross section as seen transverse its longitudinal direction than the dowel (15) forming the second male part (8).

13. A furniture joint according to any of the previous claims, wherein the first furniture part (5) is a post shaped item, a knob shaped item or a block shaped item.

14. Furniture or a furniture sub-assembly comprising a furniture joint (1) according to any of claims 1-12.

## Patentansprüche

1. Möbelverbindung (1), umfassend ein erstes Möbelteil (5) mit einem ersten und einem zweiten Einfügeteil (7, 8) und ein zweites Möbelteil (6) mit einem ersten und einem zweiten Aufnahmeteil (9, 10), wobei
der erste und der zweite Einfügeteil (7, 8) jeweils durch einen sich in einer Längsrichtung erstreckenden Dübel (11, 15) gebildet sind, der ein freies Ende (12, 16) aufweist, das von einer Oberfläche (13) des ersten Möbelteils (5) weg zeigt,
der erste Aufnahmeteil (9) durch eine Aussparung (18) mit einer gekrümmten Verlängerung zwischen einem ersten Endabschnitt (23) und einem zweiten Endabschnitt (24) gebildet ist, wobei der erste Endabschnitt (23) einen Einsetzabschnitt (26) bildet und der zweite Endabschnitt einen Verriegelungsabschnitt bildet, und
der zweite Aufnahmeteil (10) durch eine Aussparung (25) mit einer geradlinigen Verlängerung zwischen einem ersten Endabschnitt (60) und einem zweiten Endabschnitt (61) gebildet wird, wobei der erste Endabschnitt (60) einen Einsetzabschnitt (32) bildet und der zweite Endabschnitt einen Verriegelungsabschnitt bildet, wodurch
die Möbelverbindung (1) eingerichtet, um durch Bewegen des ersten Möbelteils (5) entlang der Längsrichtungen der Dübel (11, 15), so dass der Einsetzabschnitt (26) des ersten Aufnahmeteils (9) das freie Ende (16) des den ersten Einfügeteil (7) bildenden Dübels (11) aufnimmt, und dass der Einsetzabschnitt (32) des zweiten Aufnahmeteils (10) das freie Ende (16) des den zweiten Einfügeteil (8) bildenden Dübels (15) aufnimmt, in eine Montageposition gebracht zu werden, und
aus der Montageposition in eine Verriegelungsposition, durch Drehen des ersten Möbelteils (5) in Bezug auf das zweite Möbelteil (6), so dass der den ersten Einfügeteil (7) bildende Dübel (11) entlang der gekrümmten Aussparung (18), die den ersten Aufnahmeteil (9) bildet, von dem ersten Endabschnitt (23) zu dem zweiten Endabschnitt (24) bewegt wird, während der Dübel (15), der den zweiten Einfügeteil (8) bildet, gedreht und entlang der geradlinigen Verlängerung der Aussparung (25), die den zweiten Aufnahmeteil (10) bildet, von dem ersten Endabschnitt (60) zu dem zweiten Endabschnitt (61) bewegt wird, wodurch das erste und zweite Möbelteil (5, 6) in der Verriegelungsposition daran gehindert sind, in Längsrichtung der Dübel (11, 15) getrennt zu werden.

2. Möbelverbindung nach Anspruch 1, ferner umfassend einen Zwischenindikatorabschnitt (80), in dem die erste oder zweite Längsseitenwand (22a; 22b) des ersten Aufnahmeteils (9) eine Einschnürung (81) aufweist, wobei, wenn der den ersten Einfügeteil (7) bildende Dübel (11) die Einschnürung (81) passiert, der den zweiten Einfügeteil (8) bildende Dübel (15) vorübergehend in Richtung des zweiten Endabschnitts (61) des zweiten Aufnahmeteils (10) in einem größeren Ausmaß gezwungen wird, als wenn der den ersten Einfügeteil (7) bildende Dübel (11) in den zweiten Endabschnitt (24) des ersten Aufnahmeteils (9) aus der Montageposition in die Verriegelungsposition bewegt wird.

3. Möbelverbindung nach Anspruch 1, wobei die Dübel (11, 15), die die ersten und zweiten Einfügeteile (7, 8) bilden, jeweils Verriegelungsmittel in Form von mindestens einem Rand (14, 17) umfassen, der sich radial von der Hüllfläche des Dübels erstreckt, und wobei die Aussparungen (18, 25), die die ersten und zweiten Aufnahmeteile (9, 10) bilden, jeweils mindestens eine entsprechende Nut (28a, 28b, 34) umfassen, wobei in der Verriegelungsposition der mindestens eine Rand (14) des ersten Einsetzteils (7) angepasst ist, um in Eingriff mit der mindestens einen entsprechenden Nut (28a, 28b) des ersten Aufnahmeteils (9) zu treten, und der mindestens eine Rand (17) des zweiten Einsetzteils (8) angepasst ist, um in Eingriff mit der mindestens einen entsprechenden Nut (34) des zweiten Aufnahmeteils (10) zu treten.

4. Möbelverbindung nach einem der vorhergehenden Ansprüche, wobei eine oder beide gegenüberliegenden Längsseitenwände (22), die sich zwischen dem ersten und zweiten Endabschnitt (23, 24) der Aussparung (18) des ersten Aufnahmeteils (7) erstrecken, mindestens eine Nut (28, 28b) aufweisen.

5. Möbelverbindung nach Anspruch 4, wobei die gegenüberliegenden Längsseitenwände (22) der den ersten Aufnahmeteil (9) bildenden Aussparung (18) eine einseitig gekrümmte Verlängerung aufweisen, die konvex in Richtung der den zweiten Aufnahmeteil (10) bildenden Aussparung (25) gerichtet ist, oder eine einseitig gekrümmte Verlängerung, die konkav von der den zweiten Aufnahmeteil (10) bildenden Aussparung (25) weg zeigt.

6. Möbelverbindung nach Anspruch 4 oder 5, wobei die Nut (28a, 28b) der den ersten Aufnahmeteil (9) bildenden Aussparung (18) eine Längsausdehnung entlang mindestens eines Teils einer oder beider der gegenüberliegenden Längsseitenwände (22) und entlang der Hüllfläche (27) des zweiten Endabschnitts (24) aufweist.

7. Möbelverbindung nach einem der Ansprüche 4-6, wobei sich der Abstand zwischen den gegenüberliegenden Längsseitenwänden (22) der den ersten Aufnahmeteil (9) bildenden Aussparung (18) allmählich verringert, in einer Richtung von dem ersten Endabschnitt (23) zu dem zweiten Endabschnitt (24) gesehen.

8. Möbelverbindung nach einem der Ansprüche 4-6, wobei der Abstand zwischen den gegenüberliegenden Längsseitenwandabschnitten (22a, 22b) der den ersten Aufnahmeteil (9) bildenden Ausnehmung (18), entlang der Öffnung (19) gesehen, zwischen dem ersten und dem zweiten Endabschnitt (23, 24) gleichförmig ist, während er entlang des Zwischenanzeigeabschnitts 80 lokal reduziert ist.

9. Möbelverbindung nach einem der Ansprüche 4-8, wobei die mindestens eine Nut (28a, 28b) der den ersten Aufnahmeteil (9) bildenden Aussparung (18) einen Querschnitt aufweist, quer zu seiner Längserstreckung gesehen, der komplementär mit dem mindestens einen Rand (14) des Dübels (11) ist, der das erste Einfügeteil (7) bildet.

10. Möbelverbindung nach einem der vorhergehenden Ansprüche, bei der mindestens ein Teil der Hüllfläche (33) des zweiten Endabschnitts (61) der Aussparung (25), die den zweiten Aufnahmeteil (10) bildet, mindestens eine Nut (34) aufweist, die geeignet ist, mit mindestens einem Rand (17) des den zweiten Einfügeteil (8) bildenden Dübels (15) in Eingriff zu kommen, wenn sich die Möbelverbindung (1) in der Verriegelungsposition befindet.

11. Möbelverbindung nach einem der vorstehenden Ansprüche, bei der die die ersten und zweiten Einfügeteile (7, 8) bildenden Dübel (11, 15) und/oder ihre jeweiligen mindestens einen Ränder (14, 17) aus einem anderen Material als dem Material des ersten Möbelteils (5) gebildet sind.

12. Möbelverbindung nach einem der vorhergehenden Ansprüche, bei der der den ersten Einfügeteil (7) bildende Dübel (11) einen größeren Querschnitt, quer zu seiner Längsrichtung gesehen, aufweist als der den zweiten Einfügeteil (8) bildende Dübel (15).

13. Eine Möbelverbindung gemäß einem der vorhergehenden Ansprüche, wobei das erste Möbelteil (5) ein ständerförmiges Element, ein knopfförmiges Element oder ein blockförmiges Element ist.

14. Möbel oder eine Möbelbaugruppe, umfassend eine Möbelverbindung (1) nach einem der Ansprüche 1-12.

## Revendications

1. Système d'assemblage (1) pour meuble, comprenant une première partie meuble (5) comportant une première et une seconde partie mâle (7, 8), et une seconde partie meuble (6) comportant une première et une seconde partie femelle (9, 10), dans lequel
les première et seconde parties mâles (7, 8) sont individuellement formées par un goujon (11, 15) s'étendant dans une direction longitudinale et comportant une extrémité libre (12, 16) orientée à l'opposé d'une surface (13) de la première partie meuble (5),
la première partie femelle (9) est formée par un évidement (18) ayant une étendue courbée entre une première partie d'extrémité (23) et une seconde partie d'extrémité (24), ladite première partie d'extrémité (23) formant une partie d'insertion (26) et ladite seconde partie d'extrémité formant une partie de verrouillage, et
la seconde partie femelle (10) est formée par un évidement (25) ayant une étendue en ligne droite entre une première partie d'extrémité (60) et une seconde partie d'extrémité (61), ladite première partie d'extrémité (60) formant une partie d'insertion (32), ladite seconde partie d'extrémité formant une partie de verrouillage, moyennant quoi
le système d'assemblage (1) pour meuble est conçu pour être placé à une position de montage par un déplacement de la première partie meuble (5) dans les directions longitudinales desdits goujons (11, 15) de façon telle que la partie d'insertion (26) de la première partie femelle (9) reçoive l'extrémité libre (16) du goujon (11) formant la première partie mâle (7), et que la partie d'insertion (32) de la seconde partie femelle (10) reçoive l'extrémité libre (16) du goujon (15) formant la seconde partie mâle (8), et
de la position de montage à une position de verrouillage en faisant tourner la première partie meuble (5) par rapport à la seconde partie meuble (6) de façon à déplacer le goujon (11) formant la première partie mâle (7) le long de l'évidement courbé (18) formant la première partie femelle (9) de la première partie d'extrémité (23) à la seconde partie d'extrémité (24), tout en faisant tourner et en déplaçant le goujon (15) formant la seconde partie mâle (8) le long de l'étendue en ligne droite de l'évidement (25) formant la seconde partie femelle (10) de la première partie d'extrémité (60) à la seconde partie d'extrémité (61), moyennant quoi, dans ladite position de verrouillage, les première et seconde parties meubles (5, 6) ne peuvent pas être séparées dans la direction longitudinale desdits goujons (11, 15).

2. Système d'assemblage pour meuble selon la revendication 1, comprenant en outre une partie d'indication intermédiaire (80) dans laquelle la première paroi latérale longitudinale ou la seconde paroi latérale longitudinale (22a ; 22b) de la première partie femelle (9) comprend un resserrement (81), moyennant quoi, lorsque le goujon (11) formant la première partie mâle (7) passe le resserrement (81), le goujon (15) formant la seconde partie mâle (8) est forcé temporairement en direction de la seconde partie d'extrémité (61) de la seconde partie femelle (10) dans une mesure plus grande que lorsque le goujon (11) formant la première partie mâle (7) est déplacé de la position de montage à la position de verrouillage en direction de la seconde partie d'extrémité (24) de la première partie femelle (9).

3. Système d'assemblage pour meuble selon la revendication 1, dans lequel les goujons (11, 15) formant les première et seconde parties mâles (7, 8) comprennent individuellement des moyens de verrouillage sous la forme d'au moins un rebord (14, 17) s'étendant radialement de la surface d'enveloppe du goujon, et dans lequel les évidements (18, 25) formant les première et seconde parties femelles (9, 10) comprennent individuellement au moins une rainure correspondante (28a, 28b, 34), moyennant quoi, dans ladite position de verrouillage, l'au moins un rebord (14) de la première partie mâle (7) est conçu pour venir en prise avec l'au moins une rainure correspondante (28a, 28b) de la première partie femelle (9) et l'au moins un rebord (17) de la seconde partie mâle (8) est conçu pour venir en prise avec l'au moins une rainure correspondante (34) de la seconde partie femelle (10).

4. Système d'assemblage pour meuble selon l'une quelconque des revendications précédentes, dans lequel une paroi latérale longitudinale ou les deux parois latérales longitudinales opposées (22) s'étendant entre les première et seconde parties d'extrémité (23, 24) de l'évidement (18) de la première partie femelle (7) comprend/comprennent au moins une rainure (28, 28b).

5. Système d'assemblage pour meuble selon la revendication 4, dans lequel les parois latérales longitudinales opposées (22) de l'évidement (18) formant la première partie femelle (9) ont une étendue à courbe unique dont la partie convexe est orientée vers l'évidement (25) formant la seconde partie femelle (10), ou ont une étendue à courbe unique dont la partie concave est orientée à l'opposé de l'évidement (25) formant la seconde partie femelle (10).

6. Système d'assemblage pour meuble selon la revendication 4 ou 5, dans lequel la rainure (28a, 28b) de l'évidement (18) formant la première partie femelle (9) a une étendue longitudinale le long d'au moins une partie d'une ou des deux parois latérales longitudinales opposées (22) et le long de la surface d'enveloppe (27) de la seconde partie d'extrémité (24).

7. Système d'assemblage pour meuble selon l'une quelconque des revendications 4 à 6, dans lequel la distance séparant les parois latérales longitudinales opposées (22) de l'évidement (18) formant la première partie femelle (9) va en diminuant graduellement lorsqu'observée dans un sens de la première partie d'extrémité (23) vers la seconde partie d'extrémité (24).

8. Système d'assemblage selon l'une quelconque des revendications 4 à 6, dans lequel la distance séparant les parties de parois latérales longitudinales opposées (22a, 22b) de l'évidement (18) formant la première partie femelle (9), lorsqu'observée le long de ladite ouverture (19), est uniforme entre les première et seconde parties d'extrémité (23, 24), tout en étant localement réduite le long de la partie d'indication intermédiaire (80).

9. Système d'assemblage pour meuble selon l'une quelconque des revendications 4 à 8, dans lequel l'au moins une rainure (28a, 28b) de l'évidement (18) formant la première partie femelle (9) a une section transversale lorsqu'observée transversalement à son étendue longitudinale qui est complémentaire à l'au moins un rebord (14) du goujon (11) formant la première partie mâle (7).

10. Système d'assemblage pour meuble selon l'une quelconque des revendications précédentes, dans lequel au moins une partie de la surface d'enveloppe (33) de la seconde partie d'extrémité (61) de l'évidement (25) formant la seconde partie femelle (10) comprend au moins une rainure (34) conçue pour venir en prise avec l'au moins un rebord (17) du goujon (15) formant la seconde partie mâle (8) lorsque le système d'assemblage pour meuble (1) est dans la position de verrouillage.

11. Système d'assemblage pour meuble selon l'une quelconque des revendications précédentes, dans lequel les goujons (11, 15) formant les première et seconde parties mâles (7, 8) et/ou leur au moins un rebord respectif (14, 17) sont formés dans un matériau différent du matériau de la première partie meuble (5).

12. Système d'assemblage pour meuble selon l'une quelconque des revendications précédentes, dans lequel le goujon (11) formant la première partie mâle (7) a une section transversale plus grande lorsqu'observée transversalement à sa direction longitudinale que le goujon (15) formant la seconde partie mâle (8).

13. Système d'assemblage pour meuble selon l'une quelconque des revendications précédentes, dans lequel la première partie meuble (5) est un élément en forme de pied, un élément en forme de bouton ou un élément en forme de bloc.

14. Meuble ou sous-ensemble de meuble comprenant un système d'assemblage pour meuble (1) selon l'une quelconque des revendications 1 à 12.
